# EUROPÄISCHE PATENTANMELDUNG

(11) **EP 2 187 491 A1**
(43) Veröffentlichungstag der Anmeldung: **19.05.2010**
(21) Anmeldenummer: 08291054.8
(22) Anmeldetag: 12.11.2008
(51) Int. Cl.: H02G 3/04, H02G 3/30

(54) **Elektrische Leitung für Kraftfahrzeuge**

(71) Anmelder: Nexans, 75008 Paris (FR)
(72) Erfinder: Nachbauer, Otto, 92695 Floss (DE)
(74) Vertreter: Döring, Roger

(57) **Zusammenfassung**

Es wird eine elektrische Leitung (1) für Kraftfahrzeuge angegeben, die mindestens zwei zu einer Einheit zusammengefaßte, isolierte elektrische Leiter (4,5) hat, an welche bei fertig bestückter Leitung an einem Ende derselben ein Sensor (3) angeschlossen ist. Die Leiter (4,5) sind von einem vorgefertigten Rohr (6) aus Kunststoff umgeben, an dem außen einstückig zu demselben gehörende Teile (7) einer Befestigungseinrichtung zur Festlegung der Leitung (1) an vorgegebenen Festpunkten eines Kraftfahrzeugs angebracht sind, an denen zu den Teilen (7) des Rohres (6) komplementäre Teile der Befestigungseinrichtung vorhanden sind.

## Beschreibung

Die Erfindung betrifft eine elektrische Leitung für Kraftfahrzeuge, die mindestens zwei zu einer Einheit zusammengefaßte isolierte elektrische Leiter hat, an welche bei fertig bestückter Leitung an einem Ende derselben ein Sensor angeschlossen ist.

Derartige, mit Sensoren bestückte Leitungen werden in modernen Kraftfahrzeugen - im folgenden kurz "Fahrzeug" genannt - in großer, ständig ansteigender Anzahl für Überwachungs- und Anzeigezwecke eingesetzt. Ein "Fahrzeug" können sowohl ein Personenkraftwagen als auch ein Lastkraftwagen oder ein Anhänger sein. Mit Sensoren können beispielsweise die Temperatur an unterschiedlichen Stellen eines Fahrzeugs, das Antiblockiersystem (ABS), das elektronische Bremssystem (EBS), der Verschleiß an Bremsbacken oder der Reifendruck überwacht und zur Anzeige gebracht werden. Als Ultraschallwandler ausgebildete Sensoren werden auch zur Messung des Abstandes eines Fahrzeugs von einem Hindernis und zur Auslösung eines Warnsignals eingesetzt. Alle diese Sensoren sind über eine elektrische Leitung mit einer im jeweiligen Fahrzeug vorhandenen Zentraleinheit verbunden.

Entsprechende Leitungen können zusammen mit anderen Leitungen in einem Kabelsatz zusammengefaßt sein, aus dem sie mit unterschiedlichen Längen herausragen. Die Leitungen müssen nach Verlegung des Kabelsatzes mit entsprechender Länge bis zum Einsatzort des jeweiligen Sensors geführt und dabei an der Karosserie oder anderen Festpunkten eines Fahrzeugs befestigt werden. Das gilt auch und besonders für Leitungen, die beispielsweise einzeln von der Zentraleinheit bis zum Einsatzort des Sensors verlegt werden. Entsprechende Festpunkte liegen dabei nicht nur innerhalb der Karosserie eines Fahrzeugs, sondern beispielsweise auch außen am Boden desselben oder in Radkästen. Die Leitungen müssen für alle Einsatzorte robust und mechanisch ausreichend stabil ausgeführt sein. Sie haben zum Schutz der Leiter beispielsweise einen dieselben umgebenden gemeinsamen Mantel aus Isoliermaterial. Ihre Befestigung an Festpunkten im Fahrzeug wird in der Regel unter Einsatz zusätzlicher Befestigungselemente ausgeführt, wobei vorher außen an der Leitung auch Teile einer Befestigungseinrichtung montiert werden können, die mit korrespondierenden, an den Festpunkten vorhandenen Teilen zusammenwirken.

Der Erfindung liegt die Aufgabe zugrunde, die eingangs geschilderte Leitung so zu gestalten, daß sie einen vereinfachten Aufbau hat und einfacher hergestellt werden kann.

Diese Aufgabe wird gemäß der Erfindung dadurch gelöst, daß die Leiter in einem vorgefertigten Rohr aus Kunststoff angeordnet sind, an dem außen einstückig zu demselben gehörende Teile einer Befestigungseinrichtung zur Festlegung der Leitung an vorgegebenen Festpunkten des Fahrzeugs angebracht sind, an denen zu den Teilen des Rohres komplementäre Teile der Befestigungseinrichtung vorhanden sind.

Der wesentliche Vorteil dieser Leitung besteht darin, daß ein vorgefertigtes Rohr zur Aufnahme der isolierten Leiter eingesetzt ist, das einteilig mit allen für die Befestigung der Leitung an oder in einem Fahrzeug erforderlichen Teilen bestückt ist. Dabei ist es auch möglich, das Rohr zusätzlich so zu gestalten, daß es an vorgegebenen Stellen zum Schutz gegen beim Betrieb des Fahrzeugs auftretende mechanische Beanspruchungen, wie beispielsweise Scheuern, verdickt ist. An anderen, ebenfalls vorgegebenen Stellen kann die Wandstärke des Rohres zur Verbesserung seiner Biegbarkeit auch reduziert sein. Das Rohr bietet insgesamt einen wirksamen mechanischen Schutz für die umschlossenen Leiter. Es hat den weiteren, wesentlichen Vorteil, daß die Leiter beispielsweise als isolierte Einzelleiter in das Rohr eingezogen werden können, die an ihren Enden bereits mit elektrischen Kontaktteilen bestückt sein können. Ein vorangehendes Verbinden der Leiter zu einer einteiligen Einheit mit entsprechendem Aufwand, beispielsweise durch einen gemeinsamen Mantel, ist bei dieser Leitung nicht mehr erforderlich.

Ein Ausführungsbeispiel des Erfindungsgegenstandes ist in den Zeichnungen dargestellt.

Es zeigen:
Fig. 1 in rein schematischer Darstellung ein Fahrzeug mit darin verlegten Leitungen.
Fig. 2 ebenfalls in schematischer Darstellung eine Leitung nach der Erfindung.
Fig. 3 einen Schnitt durch Fig. 2 entlang der Linie III - III in vergrößerter Darstellung.
Fig. 4 die Leitung nach Fig. 2 im Schnitt in wiederum schematischer Darstellung.
Fig. 5 einen Ausschnitt aus dem in der Leitung nach Fig. 4 verwendeten Rohr in vergrößerter Darstellung.

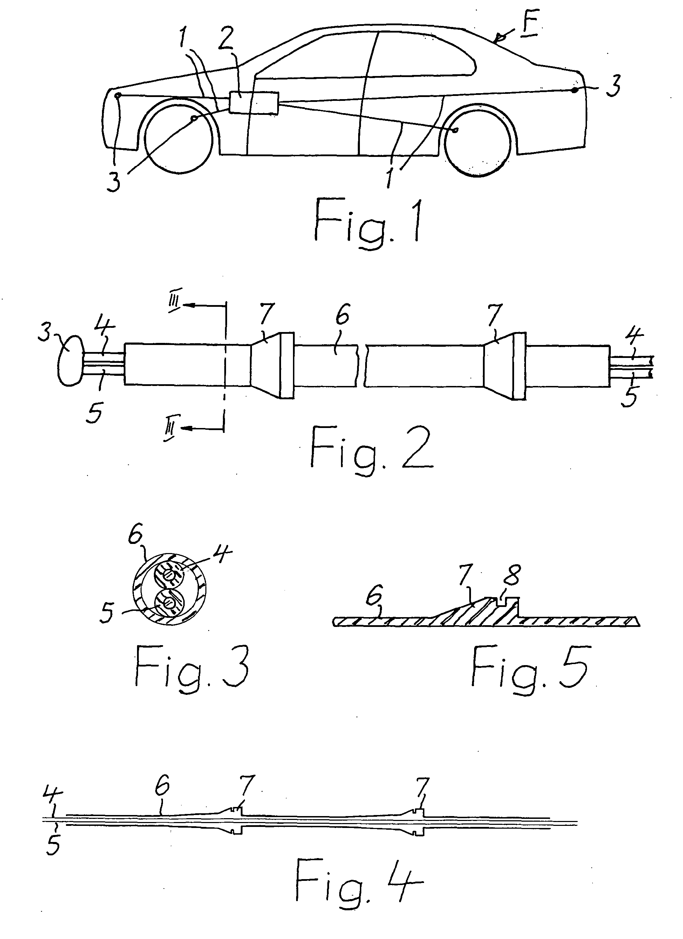

In einem in Fig. 1 durch einen Umriß angedeuteten Fahrzeug F ist eine Anzahl von elektrischen Leitungen 1 verlegt, die mit einem Ende an eine Zentraleinheit 2 angeschlossen sind und an ihrem anderen Ende jeweils mit einem Sensor 3 bestückt sind.

Eine Leitung 1 hat mindestens zwei isolierte elektrische Leiter 4 und 5 - im folgenden "Adern 4 und 5" genannt -, die in einem Rohr 6 aus Kunststoff angeordnet sind. Das Rohr 6 kann beispielsweise aus Polyamid oder Polypropylen bestehen. Im Rohr 6 sind in bevorzugter Ausführungsform zwei Adern 4 und 5 vorhanden. Es können aber auch mehr als zwei Adern sein. Das Rohr 6 hat in seinem Verlauf an vorher festgelegten Stellen Teile 7 einer Befestigungseinrichtung, die einteilig zu demselben gehören bzw. mit demselben verbunden sind. Sie werden also bei der Herstellung des Rohres 6 gleichzeitig mit erzeugt. Die Teile 7 haben in axialer Richtung des Rohres 6 Abstände voneinander, welche den Abständen der Festpunkte im Fahrzeug F entsprechen, an denen die jeweilige Leitung 1 befestigt werden soll.

Das Rohr 6 wird als separates Bauteil beispielsweise durch Spritzgießen bzw. durch Extrusion hergestellt. Die Adern 4 und 5 werden ebenfalls in bekannter Technik erzeugt. Zur Herstellung der Leitung 1 werden beispielsweise zwei Adern 4 und 5 in ein Rohr 6 eingezogen, das eine der Verlegestrecke entsprechende Länge hat. An einem Ende der Adern 4 und 5 kann vorher der Sensor 3 angeschlossen werden, beispielsweise elektrisch leitend. Das kann aber auch nachträglich durchgeführt werden. Am anderen Ende der Leitung 1 kann ein Steckelement mit den Adern 4 und 5 verbunden werden, an dem auch das Rohr 6 befestigt werden kann. Eine Relativbewegung von Adern 4 und 5 sowie Rohr 6 kann dadurch ausgeschlossen werden, auch wenn das Rohr 6 die Adern 4 und 5 nicht dicht anliegend umgibt. Jede Leitung 1 kann vor oder nach ihrer Montage im Fahrzeug F mit der Zentraleinheit 2 verbunden werden, beispielsweise unter Verwendung des schon erwähnten Steckelements.

Die am Rohr 6 vorgesehenen Teile 7 der Befestigungseinrichtung haben gemäß den Fig. 4 und 5 beispielsweise die Form einer Tülle. Sie sind rund um das Rohr 6 geschlossen und stehen radial von demselben ab. In den Teilen 7 können umlaufende Nuten 8 angebracht sein, in welche bei der Montage der Leitung 1 an den Festpunkten des Fahrzeugs F angebrachte Befestigungsteile eingreifen, die beispielsweise als Teile einer Schnappverbindung ausgeführt sind.

Die Abstände der Teile 7 voneinander sind - wie bereits erwähnt - variabel. Diese Abstände richten sich nach den Positionen der Festpunkte im Fahrzeug F. Zusätzlich kann das Rohr 6, ebenfalls nach Maßgabe der Gegebenheiten im Fahrzeug F, an sogenannten Scheuerstellen mit räumlicher Begrenzung verdickt sein, also eine größere Wandstärke aufweisen. Ebenso ist es möglich, die Wandstärke des vorgefertigten Rohres 6 ebenfalls mit räumlicher Begrenzung an Stellen zu verringern, an denen dasselbe besonders gut biegbar sein soll. Solche Stellen liegen beispielsweise in den Übergangsbereichen von den Teilen 7 zum Rohr 6.

## Patentansprüche

1. Elektrische Leitung für Kraftfahrzeuge, die mindestens zwei zu einer Einheit zusammengefaßte, isolierte elektrische Leiter hat, an welche bei fertig bestückter Leitung an einem Ende derselben ein Sensor angeschlossen ist, **dadurch gekennzeichnet, daß** die Leiter von einem vorgefertigten Rohr (6) aus Kunststoff umgeben sind, an dem außen einstückig zu demselben gehörende Teile (7) einer Befestigungseinrichtung zur Festlegung der Leitung (1) an vorgegebenen Festpunkten eines Kraftfahrzeugs (F) angebracht sind, an denen zu den Teilen (7) des Rohres (6) komplementäre Teile der Befestigungseinrichtung vorhanden sind.

2. Leitung nach Anspruch 1, **dadurch gekennzeichnet, daß** die Wandstärke des Rohres (6) an vorgegebenen, räumlich begrenzten Stellen vergrößert ist.

3. Leitung nach Anspruch 1 oder 2, **dadurch gekennzeichnet, daß** die Wandstärke des Rohres (6) an vorgegebenen, räumlich begrenzten Stellen reduziert ist.

## Geänderte Patentansprüche

### Geänderte Patentansprüche gemäss Regel 137(2) EPÜ.

**1.** Elektrische Leistung für Kraftfahrzeuge, die mindestens zwei zu einer Einheit zusammengefaßte, isolierte elektrische Leiterhat, an welche beifertig bestückter Leitung an einem Ende der selben ein Sensorangeschlossen ist, **dadurch gekennzeichnet,**
- **daß** die Leiterin an sich bekannter Weise in einem vorgefertigten Rohr (6) aus Kunststoff angeordnet sind und
- **daß** an dem Rohr (6) in seinem Verlauf außen einstückig zu demselben gehörende Teile (7) einer Befestigungseinrichtung zur Festlegung der Leitung (1) an vorgegebenen Festpunkten eines Kraftfahrzeugs (F) angebracht sind, an denen zu den Teilen (7) des Rohres (6) komplementäre Teile der Befestigungseinrichtung vorhanden sind.

**2.** Leistung nach Anspruch 1, **dadurch gekennzeichnet, daß** die Wandstärke des Rohres (6) an vorgegebenen, räumlich begrenzten Stellen vergrößert ist.

**3.** Leitung nach Anspruch 1 oder 2, **dadurch gekennzeichnet, daß** die Wandstärke des Rohres (6) an vorgegebenen, räumlich begrenzten Stellen reduziert ist.
